**Europäisches Patentamt**

**European Patent Office**

**Office européen des brevets**

(19)

(11) Veröffentlichungsnummer: **0 242 513**

**A1**

(12)

# EUROPÄISCHE PATENTANMELDUNG

(21) Anmeldenummer: **87101569.9**

(22) Anmeldetag: **05.02.87**

(51) Int. Cl.⁴: **C08G 18/62** , C08F 220/34 , C08F 226/06 , C09D 3/72 , C09D 3/80

(30) Priorität: **21.03.86 DE 3609519**

(43) Veröffentlichungstag der Anmeldung: **28.10.87 Patentblatt 87/44**

(84) Benannte Vertragsstaaten: **AT BE CH DE ES FR GB IT LI NL SE**

(71) Anmelder: **BASF Lacke + Farben Aktiengesellschaft Max-Winkelmann-Strasse 80 D-4400 Münster(DE)**

(72) Erfinder: **Jung, Werner, Dr. Uhrwerker Strasse 65 D-4715 Ascheberg(DE)** Erfinder: **Vorbeck, Udo Rüllerstrasse 90 D-4715 Ascheberg(DE)**

(54) **Überzugsmittel auf der Basis enes Acrylatcopolymerisats mit Hydroxyl-, Carboxyl- und tertiären Aminogruppen, Verfahren zur Herstellung des Überzugsmittels sowie seine Verwendung.**

(57) Die Erfindung betrifft Überzugsmittel auf der Basis eines Acrylatcopolymerisats (A), welches erhältlich ist durch Copolymerisation von

a) 5 bis 35 Gewichts-% Hydroxyalkylestern $\alpha$, $\beta$-ungesättigter Carbonsäuren

b) 0,1 bis 8 Gewichts-%, bevorzugt 0,5 bis 4 Gewichts-%, ethylenisch ungesättigten Carbonsäuren

c) 0,3 bis 4 Gewichts-%, bevorzugt 0,3 bis 2 Gewichts-%, Monomeren mit tertiären Aminogruppen und

d) 70 bis 90 Gewichts-% weiteren Monomeren mit einer polymerisierbaren, olefinisch ungesättigten Doppelbindung,

wobei die Summe von a, b, c und d 100 Gew.-% beträgt. Die Aminzahl von (A) beträgt 1 bis 10 mg KOH/g, bevorzugt 1 bis 5 mg KOH/g, und die Säurezahl beträgt 5 bis 30 mg KOH/g. Als Vernetzungsmittel (B) wird ein Polyisocyanat mit mindestens zwei Isocyanatgruppen pro Molekül eingesetzt, wobei das Verhältnis der Isocyanatgruppen des Polyisocyanats zu den Hydroxylgruppen von (A) im Bereich von 0,3 : 1 bis 3,5 : liegt. Die erfindungsgemäßen Überzugsmittel enthalten weiter hin organisches Lösungsmittel, ggf. Pigment, Füllstoffe und übliche Hilfsstoffe und Additive sowie ggf. einen Katalysator für die Vernetzung.

Die Erfindung betrifft ein Verfahren zur Herstellung der Überzugsmittel sowie ihre Verwendung für die Autoreparaturlackierung, als Klarlack, pigmentierter Decklack, als Füller oder als Klarlack auf einem Basislack für metallpigmentierte Zweischichtlackierungen nach dem Naß-in-Naß-Verfahren.

EP 0 242 513 A1

## Überzugsmittel auf der Basis eines Acrylatcopolymerisats mit Hydroxyl-, Carboxyl-und tertiären Aminogruppen, Verfahren zur Herstellung des Überzugsmittels sowie seine Verwendung

Die Erfindung betrifft Überzugsmittel, enthaltend als wesentliches Bindemittel eine hydroxylgruppenhaltiges Acrylatcopolymerisat mit Carboxylgruppen und tertiären Aminogruppen, wobei das Acrylatcopolymerisat eine Säurezahl von 5 bis 30 mg KOH/g hat, als Vernetzungsmittel ein Polyisocyanat mit mindestens zwei Isocyanatgruppen pro Molekül, wobei das Verhältnis der Isocyanatgruppen des Polyisocyanats zu den Hydroxylgruppen des Acrylatcopolymerisats im Bereich von 0,3 : 1 bis 3,5 : 1 liegt, organisches Lösungsmittel, gegebenenfalls Pigmente, Füllstoffe und übliche Hilfsstoffe und Additive sowie gegebenenfalls einen Katalysator für die Vernetzung.

Überzugsmittel auf der Basis von hydroxylgruppenhaltigen Acrylatcopolymerisaten, die mit Polyisocyanaten gehärtet werden können und die Urethanbildung beschleunigende Gruppen enthalten, sind bekannt. Die EP-A-52 233 beschreibt ein Verfahren zur Herstellung von Acrylatcopolymerisaten durch Copolymerisation von Acryl-oder Methacrylsäureestern, Hydroxyalkylestern der Acryl-oder Methacrylsäure, Acryl-oder Methacrylsäure und gegebenenfalls Neutralmonomeren sowie die Kombination dieser Carboxylgruppen enthaltenden Polyacrylate mit geeigneten Vernetzungsmitteln. In den Beispielen werden Melamin-Formaldehyd-Kondensate als Vernetzungsmittel eingesetzt.

Aus der EP-B-39 797 sind Copolymerisate aus (Meth)-Acrylsäureestern, Monomeren mit mindestens einer Hydroxylgruppe, Monomeren mit mindestens einer tertiären Aminogruppe und gegebenenfalls anderen copolymerisierbaren Monomeren bekannt. Die mit Polyisocyanaten vernetzbaren Acrylatcopolymerisate werden in Haftklebern eingesetzt. Die beschriebenen Zusammensetzungen besitzen eine fast unbegrenzte Topfzeit.

Aus der EP-A-136 667 ist eine Überzugszusammensetzung bekannt, die ein hydroxylgruppenhaltiges Acrylatcopolymerisat enthält, welches in einem Anteil von 10 bis 40 Gew.-% Monomere mit tertiären Aminogruppen, bevorzugt N-Vinylpyrrolidon, einpolymerisiert enthält. Bis zu etwa 5 Gew.-% kann das Copolymerisat eingebaute carboxylgruppenhaltige Monomere enthalten. Die beschriebenen Überzugsmittel dienen zur Beschichtung von verchromten Flächen und schützen vor Abriß und Feuchtigkeit. Die mit Polyisocyanaten vernetzten Copolymerisate führen zu Überzügen mit guter Haftung auf Chrom, Chromlegierungen, Aluminium sowie Aluminiumlegierungen. Der relativ hohe Anteil an Aminmonomeren ist notwendig für eine gute Haftung auf den genannten Metalloberflächen.

Die DE-OS 29 00 592 beschreibt hydroxylgruppenhaltige Acrylatcopolymerisate mit tertiären Aminogruppen und gegebenenfalls Carboxylgruppen. Die Herstellung dieser Polyacrylate erfolgt in einem 2-Stufen-Verfahren. Zunächst werden in einer ersten Stufe 3 bis 30 Gewichts% des Glycidylesters der Acrylsäure oder Methacrylsäure, 0 bis 20 Gew.-% eines Hydroxyalkylesters der Acryl-oder Methacrylsäure, 5 bis 60 Gew.-% Neutralmonomere., 5 bis 70 Gew.-% eines Acrylsäure esters oder Methacrylsäureesters und 0 bis 10 Gew.-% einer $\alpha$, $\beta$ -monoolefinisch ungesättigten Mono-oder Dicarbonsäure radikalisch polymerisiert. In einer zweiten Stufe werden dann die Glycidylgruppen des Copolymerisats mit einem sekundäre Hydroxylgruppen enthaltenden sekundären Amin unter weitgehender Erhaltung der Hydroxylfunktion umgesetzt. Als sehr nachteilig erweist sich hierbei die Notwendigkeit eines 2-Stufen-Verfahrens. Bei der Verwendung von Carboxylgruppen enthaltenden Monomeren besteht die Gefahr einer vorzeitigen Gelierung des Präpolymeren durch Reaktion der Carboxylgruppen mit den Epoxidgruppen des Glycidylesters der Acryl-bsw. Methaacrylsäure. Werden Hydroxyalkylester der Acryl-oder Methacrylsäure eingesetzt, die eine primäre Hydroxylgruppe enthalten, besteht ebenfalls die Gefahr einer unerwünschten Nebenreaktion mit den vorhandenen Glycidylgruppen. Durch die fast ausschließlich vorhandenen sekundären Hydroxylgruppen ist die Reaktionsfähigkeit der Polyacrylate gegenüber als Vernetzungsmittel eingesetzten Polyisocyanaten derart eingeschränkt, daß Topfzeiten der Polyol-Polyisocyanatsysteme von mindestens 15 Stunden erzielt werden. Außerdem erfordert das Vorliegen fast ausschließlich sekundärer Hydroxylgruppen im Acrylatcopolymerisat relativ hohe Temperaturen bei der nachfolgenden Vernetzung mit Polyisocyanaten. Es treten weiterhin Probleme bezüglich ausreichender Säurestabilität und bezüglich einer Vergilbungsneigung des Lackfilms durch den relativ hohen Gehalt an Aminogruppen auf.

Die Aufgabe der vorliegenden Erfindung bestand darin, Überzugsmittel auf der Basis hydroxylgruppenhaltiger Acrylate und auf der Basis von Polyisocyanaten zu schaffen, welche ausgehend von Lackmischungen eine genügend lange und insbesondere leicht steuerbare Topfzeit haben sollten, welche bei niedrigen Tempera turen auch ohne Katalysatorzugabe schnell zu benzinfesten, nicht vergilbenden Filmen bei gleichzeitig hoher Flexibilität, Kratzfestigkeit und Witterungsbeständigkeit aushärten sollten. Die daraus resultierenden Filme sollten verbesserte Eigenschaften in bezug auf Lösungsmittelbeständigkeit und Säurebeständigkeit aufweisen.

Aus der US-PS 4,339,365 ist ein Dispergierharz bekannt, welches aus einem Acrylatcopolymerisat mit Carboxylgruppen, Hydroxylgruppen und tertiären Aminogruppen besteht. Das Acrylatcopolymerisat ist beispielsweise herstellbar durch Copolymerisation von 20 - 85 Gew.-% Alkylmethacrylaten mit 3 bis 8 Kohlenstoffatomen im Alkylrest, 5 bis 60 Gew.-% härtenden Monomeren, wie z.B. Styrol, Methylmethacrylat oder Ethylmethacrylat, 1 bis 25 Gew.-% ethylenisch ungesättigten Carbonsäuren, 1 bis 25 Gew.-% Hydroxyalkylacrylaten oder -methacrylaten und 0,1 bis 15 Gew.-% Acrylat-bzw. Methacrylatmonomeren mit tertiären Aminogruppen. Das Harz dient zur Dispergierung von Pigmenten und wird zusammen mit einem filmbildenden Hauptbindemittel, Pigmenten und Lösungsmitteln zu einer Überzugszusammensetzung verarbeitet. Diese enthält etwa 25 Gew.-% bis etwa 98 Gew.-% Hauptbindemittel, etwa 1 bis etwa 70 Gew.-% Pigmente und etwa 1 Gew.-% bis etwa 50 Gew.-% des beschriebenen Dispergierharzes, welches die Pigmente in einer Trägerflüssigkeit und im Hauptbindemittel dispergiert.

Die Aufgabe der vorliegenden Erfindung wird gelöst durch ein Überzugsmittel der eingangs genannten Art das dadurch gekennzeichnet ist, daß das Acrylatcopolymerisat (A) erhältlich ist durch Copolymerisation von

a) 5 bis 35 Gew.-% Hydroxyalkylestern $\alpha$, $\beta$ -ungesättigter Carbonsäuren

b) 0,1 bis 8 Gew.-%, bevorzugt 0,5 bis 4 Gew.-% ethylenisch ungesättigter Carbonsäuren

c) 0,3 bis 4 Gew.-%, bevorzugt 0,3 bis 2 Gew.-%, Monomeren mit tertiären Aminogruppen und

d) 70 bis 90 Gew.-% weiteren Monomeren mit einer polymerisierbaren, olefinisch ungesättigten Doppelbindung, wobei die Summe von a, b, c und d 100 Gewichts-% beträgt und die Aminzahl von (A) 1 bis 10 mg KOH/g, bevorzugt 1 bis 5 mg KOH/g, beträgt.

Als Komponente a) kommen Hydroxyalkylester $\alpha$, $\beta$ -ungesättigter Carbonsäuren mit primären oder sekundären Hydroxylgruppen in Frage. Ist eine hohe Reaktivität des Acrylatcopolymerisats erwünscht, können ausschließlich Hydroxyalkylester mit primären Hydroxylgruppen eingesetzt werden, soll das Polyacrylat weniger reaktiv sein, können ausschließlich Hydroxyalkylester mit sekundären Hydroxylgruppen eingesetzt werden. Selbstverständlich können auch Mischungen von Hydroxyalkylestern mit primären Hydroxylgruppen und Hydroxyalkylestern mit sekundären Hydroxylgruppen verwendet werden. Beispiele für geeignete Hydroxyalkylester $\alpha$, $\beta$ -ungesättigter Carbonsäuren mit primären Hydroxylgruppen sind Hydroxyethylacrylat, Hydroxypropylacrylat, Hydroxybutylacrylat, Hydroxyamylacrylat, Hydroxyhexylacrylat, Hydroxyoctylacrylat und die entsprechenden Methacrylate.

Als Beispiele für verwendbare Hyroxyalkylester mit einer sekundären Hydroxylgruppe seien 2-Hydroxypropylacrylat, 2-Hydroxybutylacrylat, 3-Hydroxybutylacrylat und die entsprechenden Methacrylate genannt.

Vorteilhafterweise kann die Komponente a) zumindest teilweise ein Umsetzungsprodukt aus einem Mol Hydroxyethylacrylat und/oder Hydroxyethylmethacrylat und durchschnittlich zwei Mol $\epsilon$ -Caprolacton sein.

Bevorzugt ist es, wenn als Komponente a) zumindest teilweise ein Umsetzungsprodukt aus Acrylsäure und/oder Methacrylsäure mit dem Glycidylester einer Carbonsäure mit einem tertiären $\alpha$-Kohlenstoffatom eingesetzt wird. Glycidylester stark verzweigter Monocarbonsäuren sind unter dem Handelsnamen "Cardura" erhätlich.

Als Komponente b) werden beispielsweise Acrylsäure, Methacrylsäure, Itaconsäure, Crotonsäure und Halbester der Malein-und Fumarsäure sowie deren Mischungen eingesetzt.

Beispiele für Monomere mit tertiären Aminogruppen (Komponente c) sind Dimethylaminoethylacrylat, Dimethylaminoethylmethacrylat, 2-Vinylpyridin und 4-Vinylpyridin.

Geeignete weitere Monomere mit einer polymerisierbaren, olefinisch ungesättigten Doppelbindung (Komponente d) sind Styrol, Vinyltoluol, Alkylester der Acryl-und Methylacrylsäure, Alkoxyethylacrylate und Aryloxyethylacrylate und die entsprechenden Methacrylate sowie Ester der Malein-und Fumarsäre. Genannt seien als Beispiele Methylacrylat, Ethylacrylat, Propylacrylat, Butylacrylat, Isopropylacrylat, Isobutylacrylat, Pentylacrylat, Isoamylacrylat, Hexylacrylat, 2-Ethylhexylacrylat, Octylacrylat, 3,5,5-Trimethylhexylacrylat, Decylacrylat, Dodecylacrylat, Hexadecylacrylat, Octadecylacrylat, Octadecenylacrylat, Pentylmethacrylat, Isoamylmethacrylat, Hexylmethacrylat, 2-Ethylbutylmethacrylat, Octylmethacrylat, 3,5,5-Trimethylhexylmethacrylat, Decylmethacrylat, Dodecylmethacrylat, Hexadecylmeth acrylat, Octadecylmethacrylat, Butoxyethylmethacrylat, Methylmethacrylat, Ethylmethacrylat, Propylmethacrylat, Isopropylmethacrylat, Butylmethacrylat, Cyclohexylacrylat, Cyclohexylmethacrylat, Acrylnitril, Methacrylnitril, Vinylacetat, Vinylchlorid und Phenoxyethylacrylat. Weitere Monomere können eingesetzt werden, sofern sie nicht zu unerwünschten Eigenschaften des Copolymerisats führen.

Beispiele für geeignete Polyisocyanate mit mindestens zwei Isocyanatgruppen pro Molekül (Komponente B), die zur Vernetzung der Acrylatcopolymerisate verwendet werden können, sind 2,4-Toluylendiisocyanat, 2,6-Toluylendiisocyanat, 4,4'-Diphenylmethandiisocyanat, Hexamethylendiisocyanat, 3,5,5-Trimethyl-1-isocyanato-3-isocyanatomethylcyclohexan, m-Xylylendiisocyanat, p-Xylylendiisocyanat, Tetramethylendiisocyanat, Cyclohexan-1,4-diisocyanat, 4,4'-Diisocyanatdiphenylether, 2,4,6-Triisocyanatto-

... und 4.4'4'-Trisocyanattriphenylmethan. Die Polyisocyanate können zu Präpolymeren mit höherer Molmasse verknüpft sein. Zu nennen sind hierbei Addukte aus Toluylendiisocyanat und Trimethylolpropan, ein aus 3 Molekülen Hexamethylendiisocyanat gebildetes Biuret sowie die Trimeren des Hexymethylendiisocyanats und des 3,5,5-Trimethyl-1-isocyanato-3-isocyanatomethylcyclohexans.

Das erfindungsgemäße Überzugsmittel kann einen Vernetzungskatalysator enthalten. Dieser wird vorteilhafterweise in einer Menge von 0,01 bis 1 Gewichts-%, bezogen auf den Festkörpergehalt der reagierenden Komponenten, verwendet. Bevorzugt werden als Katalysatoren Amine, beispielsweise Dimethylethanolamin, verwendet. Weitere geeignete Katalysatoren sind Zinn-und Zinkorganische Verbindungen sowie andere Schwermetallbeschleuniger.

Da in das Acrylatcopolymerisat des erfindungsgemäßen Überzugsmittels Gruppen eingebaut sind, die die Polyurethanbildung katalysieren, kann auf die Verwendung eines externen Katalysators verzichtet werden.

Die erfindungsgemäßen Überzugsmittel können bei niedrigen Temperaturen, und zwar bis etwa 100 °C, gehärtet werden. Sie können aus der Polyurethanlacktechnologie übliche Hilfsstoffe und Zusatzstoffe enthalten, wie zum Beispiel Verlaufsmittel auf Celluloseesterbasis, Oligoalkylacrylate, Silikonöle, Weichmacher, wie Phosphorsäureester, Phthalsäureester, Pigmente und Füllstoffe, viskositätskontrollierende Zusätze und Mattierungsmittel.

Zur Verlängerung der Topfzeit können bis zu 15 Gewichts-%, bezogen auf das Gesamtgewicht der Überzugszusammensetzung, eines oder mehrerer tertiärer Monoalkohole verwendet werden. Als Beispiele für geeignete topfzeitverlängernde Alkohole seien t-Butanol und 1-Methoxy-2-methyl-propan-2-ol genannt. Je nach Verwendungszweck kann die Topfzeit der erfindungsgemäßen Überzugsmittel gesteuert werden. Sie ist abhängig von der Aminzahl, da Aminogruppen die Urethanbildung katalysieren, von der Höhe der Hydroxylzahl und von der Art der vorhandenen, vernetzungsfähigen Hydroxylgruppen. Die Topfzeit der erfindungsgemäßen Zusammensetzungen ist abhängig von der Säurezahl, da die Urethanbildung durch Säuregruppen beschleunigt wird und natürlich von der Menge an zugesetztem topfzeitverlängernden tertiären Alkohol. Dabei zeigte sich, daß gerade die Kombination von tertiären Aminogruppen und Säuregruppen zu günstigen Topfzeiten, relativ niedrigen Härtungstemperaturen und relativ kurzen Härtungszeiten führt und die Eigenschaften der resultierenden Filme in bezug auf Benzinfestigkeit, Vergilbungsresistenz, Lösungsmittelbeständigkeit, Säurebeständigkeit und Witterungsbeständig keit günstig beeinflußt. So ist beispielsweise die Vergilbungsresistenz der aus dem erfindungsgemäßen Überzugsmittel resultierenden Filme auf den relativ niedrigen Gehalt an tertiären Aminogruppen zurückzuführen.

Die erfindungsgemäßen Überzugsmittel können gegebenenfalls auch geringe Anteile anderer mit Polyisocyanaten vernetzbarer Bindemittel enthalten.

Die Erfindung betrifft auch Verfahren zur Herstellung der erfindungsgemäßen Überzugsmittel, bei denen zur Herstellung des Acrylatcopolymerisates (A)

a) 5 bis 35 Gewichts-% Hydroxyalkylester $\alpha$, $\beta$ -ungesättigter Carbonsäuren

b) 0,1 bis 8 Gewichts-%, bevorzugt 0,5 bis 4 Gewichts-%, ethylenisch ungesättigte Carbonsäuren

c) 0,3 bis 4 Gewichts-%, bevorzugt 0,3 bis 2 Gewichts-%, Monomere mit tertiären Aminogruppen und

c) 70 bis 90 Gewichts-% weitere Monomere mit einer polymerisierbaren, olefinisch ungesättigten Doppelbindung in einem organischen Lösungsmittel unter Zusatz von Polymerisationsinitiatoren copolymerisiert werden, wobei die Summe von a, b, c und d 100 Gewichts-% beträgt, die Säurezahl des Copolymerisats 5 bis 30 mg KOH/g und die Aminzahl 1 bis 10 mg KOH/g, bevorzugt 1 bis 5 mg KOH/g beträgt, und dieses Copolymerisat A) mit B) einem Polyisocyanat mit mindestens zwei Isocyanatgruppen pro Molekül, organischem Lösungsmittel, gegebenenfalls Pigmenten, Füllstoffen und üblichen Hilfsstoffen und Additiven sowie gegebenenfalls mit einem Katalysator für die Vernetzung durch Mischen und gegebenenfalls durch Dispergieren zu einer Überzugsmasse verarbeitet wird mit der Maßgabe, daß das Verhältnis der Isocyanatgruppen von B) zu den Hydroxylgruppen von A) im Bereich von 0,3 : 1 bis 3,5 : 1 liegt.

Die Polymerisationsreaktion zur Herstellung der Komponente A) wird nach den allgemein üblichen Verfahren für Polymerisationen durchgeführt. Das als Polymerisationsmedium dienende Lösungsmittel kann beispielsweise ausgewählt sein aus der Gruppe Toluol, Xylol, Chlorbenzol, Butylacetat, Ethylacetat, Ethylglykolacetat, Pentylacetat, Tetrahydrofuran, Dioxan, Aceton und Methylethylketon. Die Copolymerisationstemperatur richtet sich nach der Auswahl des Polymerisationsinitiators. Geeignete Initiatoren sind aliphatische Azoverbindungen, wie beispielsweise Azobisisobutyronitril, gegebenenfalls in Kombination mit einem Reduktionsmittel, oder thermolabile hochsubstituierte Ethanderivate, beispielsweise auf Basis Benzpinakol, ebenfalls gegebenenfalls in Kombination mit einem Reduktionsmittel. Als Reduktionsmittel wird vorteilhafterweise unterphosphorige Säure eingesetzt. Bei Verwendung anderer üblicher Initiatoren, wie beispielsweise Peroxiden, tritt eine leichte Verfärbung der Polyacrylatlösungen auf.

BAD ORIGINAL

4

Die Acrylatcopolymerisate A) haben mittlere Molekulargewichte ($\overline{M}_N$) von 1000 bis 10 000, und ihre Lösungen in Estern besitzen bei 23 °C eine Viskosität von 0,5 bis 10 dPa.s bei einer Konzentration von 50 Gewichts-%.

Die Komponente a kann vorteilhafterweise zumindest teilweise ein Umsetzungsprodukt auf einem Mol Hydroxyethylacrylat und/oder Hydroxyethylmethacrylat und durchschnittlich 2 Mol $\epsilon$-Caprolacton sein. Vorteil teilfahterweise besteht die Komponente a zumindest teilweise aus einem Umsetzungsprodukt aus Acrylsäure und/oder Methacrylsäure mit dem Glycidylester einer Carbonsäure mit einem tertiären $\alpha$-Kohlenstoffatom. Die Umsetzung der Acrylsäure oder Methacrylsäure mit dem Glycidylester einer Carbonsäure mit einem tertiären $\alpha$-Kohlenstoffatom kann vor, während oder nach der Polymerisationsreaktion erfolgen. Es ist darauf zu achten, daß die Säurezahl des fertigen Polyacrylats im Bereich von 5 bis 30 mg KOH/g liegt.

Gemäß dem erfindungsgemäßen Verfahren können der Überzugszusammensetzung zur Topfzeitverlängerung bis zu 15 Gewichts-%, bezogen auf das Gesamtgewicht der Überzugszusammensetzung, eines oder mehrerer tertiärer Monoalkohole zugesetzt werden.

Die Erfindung betrifft auch ein Verfahren zur Herstellung eines Überzuges, bei dem das zuvor beschriebene, erfindungsgemäße Überzugsmittel durch Spritzen, Fluten, Tauchen, Walzen, Rakeln oder Streichen auf ein Substrat in Form eines Films aufgebracht wird und der Film bei Temperaturen bis etwa 100 °C zu einem festhaftenden Überzug gehärtet wird. Die erfindungsgemäßen Überzugsmittel können nach allen beliebigen Methoden der Lacktechnologie auf ein Substrat in Form eines Films aufgebracht werden. Die erfindungsgemäßen Überzugsmittel haben günstige Topfzeiten, die, wie bereits erläutert, je nach Anwendungszweck leicht verkürzt oder verlängert werden können. Die Zusammensetzungen sind bei niedriger Temperatur und kurzen Härtungszeiten aushärtbar. Die resultierenden Filme sind benzinfest, flexibel, kratzfest, witterungsbeständig, sehr gut lösungsmittel-und säurebeständig. Außerdem weisen sie keine Vergilbungsneigung auf.

Da die beschriebenen Überzugsmittel bei niedrigen Tem -peraturen aushärten, sind sie besonders gut geeignet für die Verwendung als Autoreparaturlacke.

Die Zusammensetzungen sind weiterhin geeignet für die Verwendung als Klarlack, pigmentierter Decklack oder als Füller.

Besonders geeignet sind die erfindungsgemäßen Überzugsmittel für die Verwendung zur Formulierung von Klarlacken für metallpigmentierte Zweischichtlackierungen ("2-Coat-1-Bake-Verfahren).

Im folgenden wird die Erfindung anhand von Ausführungsbeispielen näher erläutert. Teile bedeuten Gewichtsteile, sofern nichts anderes angegeben wird.

Die erfindungsgemäßen Überzugsmittel führen zu Überzügen mit verbesserten Ergebnissen bezüglich der Pendelhärte und der Lösungsmittelbeständigkeit. Dies geht hervor aus Vergleichsversuchen mit Überzugsmitteln auf der Basis von Acrylatharzen, welche nur Hydroxylgruppen und Carboxylgruppen oder Hydroxylgruppen und tertiäre Aminogruppen als funktionelle Gruppen enthalten.

Herstellung der Acrylatharzlösungen I und II

In einem 4 Liter-Edelstahlkessel werden vorgelegt:

| Acrylatharzlösung | I | II |
|---|---|---|
| Xylol | 390 Teile | 390 Teile |
| 1-Methoxypropylacetat-2 | 390 Teile | 390 Teile |
| unterphosphorige Säure | 0,76 Teile | 0,76 Teile |
| Glycidylester einer $C_{10}$-Fettsäure | 342 Teile | 342 Teile |

Die Mischungen werden auf 110 °C aufgeheizt, anschliessend werden aus dem Monomerentank innerhalb von 3 Stunden folgende Komponenten gleichmäßig zudosiert:

| Acrylatharzlösung | I | II |
|---|---|---|
| Methylmethacrylat | 216 Teile | 216 Teile |
| t-Butylacrylat | 360 Teile | 378 Teile |
| Styrol | 270 Teile | 270 Teile |
| Hydroxyethylmethacrylat | 216 Teile | 216 Teile |
| 1,4-Butandiolmonoacrylat | 234 Teile | 234 Teile |
| Acrylsäure | 144 Teile | 144 Teile |
| Dimethylaminoethylmeth-acrylat | 18 Teile | – |
| Mercaptoethanol | 18 Teile | 18 Teile |

Aus dem Initiatortank werden innerhalb von 3,75 Stunden folgende Komponenten gleichmäßig zudosiert:

| Acrylatharzlösung | I | II |
|---|---|---|
| Azobisisobutyronitril | 72 Teile | 72 Teile |
| Xylol | 240 Teile | 240 Teile |
| 1-Methoxypropylacetat-2 | 240 Teile | 240 Teile |

Nach Beendigung der Initiatorzugabe werden jeweils weitere 0,7 Teile unterphosphorige Säure zugegeben, und die Temperatur im Polymerisationskessel wird auf 130 °C gebracht, um die Addition des Glycidylesters an Acrylsäure zu vervollständigen. Nach 4 h Nachpolymerisation wird ein Festkörper von 60 Gew.-% erreicht.

Folgende Kennzahlen werden erzielt:

| | Acrylatharz I | Acrylatharz II |
|---|---|---|
| OH-Zahl (mg/KOH/g) | 146 | 146 |
| Säurezahl (mg/KOH/g) | 23 | 25 |
| Viskosität (50 %ig, dPa.s) | 4,2 | 3,2 |

## Herstellung der Acrylatharzlösungen III bis VI

In einem 4-Liter-Edelstahlkessel werden vorgelegt:

| Acrylatharzlös. | III | IV | V | VI |
|---|---|---|---|---|
| 1-Methoxypropyl-acetat-2 | 251 T. | 251 T. | 251 T. | 251 T. |
| Xylol | 251 T. | 251 T. | 251 T. | 251 T. |

Die Lösungsmittelmischung wird auf 130 °C aufgeheizt, dann werden innerhalb von 3 h aus dem Monomerenzulauf folgende Komponenten gleichmäßig zudosiert:

| Acrylatharzls. | III | IV | V | VI |
|---|---|---|---|---|
| Methylmethacrylat | 270 T. | 280 T. | 290 T. | 300 T. |
| n-Butylacrylat | 150 T. | 150 T. | 150 T. | 150 T. |
| Butylmethacrylat | 190 T. | 190 T. | 190 T. | 190 T. |
| Ethylhexylacrylat | 50 T. | 50 T. | 50 T. | 50 T. |
| Hydroxyethylmeth - acrylat | 210 T. | 210 T. | 210 T. | 210 T. |
| N-Vinylpyrrolidon | 100 T. | 100 T. | 100 T. | 100 T. |
| Acrylsäure | 20 T. | 20 T. | - | - |
| Dimethylamino-ethylmethacrylat | 10 T. | - | 10 T. | - |
| Mercaptoethanol | 10 T. | 10 T. | 10 T. | 10 T. |

Aus dem Initiatorzulauf werden innerhalb von 3,5 h den Acrylatharzlösungen III, IV, V und VI jeweils 25 Teile Azobisisobutyronitril, 93,5 Teile 1-Methoxypropylacetat-2 und 93,5 Teile Xylol zudosiert. Danach wird weitere 3 h lang bei 130 °C nachpolymerisiert.

Folgende Kenndaten werden erhalten:

| Kenndaten | III | IV | V | VI |
|---|---|---|---|---|
| Festkörper | 60,8 | 61,1 | 61,3 | 61,2 |
| OH-Zahl | 91 | 91 | 91 | 91 |
| Säurezahl | 14,6 | 15,1 | 2,1 | 1,3 |
| Viskosität (50 %ig, bei 23 °C in dPa.s) | 4,0 | 4,1 | 3,6 | 3,2 |

Herstellung von Stammlacken auf Basis der Acrylatharzlösungen I und II:

| Stammlack | 1 | 2 | 3 |
|---|---|---|---|
| Acrylatharzl. I | 76 T. | 76 T. | - |
| Acrylatharzl. II | - | - | 76 T. |
| 1-Methoxy-2-methyl-propan-2-ol | - | 16,9 T. | 16,9 T. |
| Xylol | 4,0 T. | - | - |
| Butylacetat | 10,2 T. | - | - |
| Butylglykolacetat | 2,1 T. | 0,3 T. | 0,3 T. |
| Dipentene | 1,0 T. | 0,1 T. | 0,1 T. |
| handelsübliches Silikonöl 0,6 % | 4,5 T. | 4,5 T. | 4,5 T. |
| handelsübliches Lichtschutzmittel | 1,2 T. | 1,2 T. | 1,2 T. |
| handelsüblicher Radikalfänger | 1,0 T. | 1,0 T. | 1,0 T. |

<u>Rezeptur der Isocyanatvernetzerlösung A für die Stamm-
lacke auf der Basis der Acrylatharzlösungen I und II:</u>

| | |
|---|---|
| Trifunktionelles aliphatisches Polyisocyanat, 90 %ig (trimerisiertes Hexamethylendiisocyanat, Desmodur N 3390) | 54,0 T. |
| Butylacetat | 21,2 T. |
| Butylglykolacetat | 12,8 T. |
| Ethylglykolacetat | 6,6 T. |
| Aromatengemisch | 3,9 T. |
| Xylol | 1,5 T. |

## Herstellung von Stammlacken auf der Basis der Acrylatharzlösungen III, IV, V, VI:

| Stammlack | 4 | 5 | 6 | 7 |
|---|---|---|---|---|
| Acrylatharzl. III | 70,0 T. | - | - | - |
| Acrylatharzl. IV | - | 70,0 T. | - | - |
| Acrylatharzl. V | - | - | 70,0 T. | - |
| Acrylatharzl. VI | - | - | - | 70,0 T. |
| handelsübliche Silikonöllösung 0,6 %ig | 0,5 T. | 0,5 T. | 0,5 T. | 0,5 T. |
| handelsübliches Lichtschutzmittel | 1,2 T. | 1,2 T. | 1,2 T. | 1,2 T. |
| handelsüblicher Radikalfänger | 1,0 T. | 1,0 T. | 1,0 T. | 1,0 T. |
| Xylol | 10,0 T. | 10,0 T. | 10,0 T. | 10,0 T. |
| Butylacetat | 17,3 T. | 17,3 T. | 17,3 T. | 17,3 T. |

## Rezeptur der Isocyanatvernetzerlösung B für die Stammlacke 4 - 7

| | |
|---|---|
| Triisocyanat auf Basis Biuret des Hexamethylendiisocyanates, 75 %ig (Desmodur N 75) | 68,0 T. |
| Butylacetat | 30,0 T. |
| 1-Methoxypropylacetat-2 | 1,2 T. |
| Butylglykolacetat | 0,8 T. |

Prüfung der Überzugsmittel auf Basis der Stammlacke 1, 2 und 3 und der Polyisocyanathärterkomponente A

Die Bestimmung der Pendelhärten erfolgte nach König. Die 2-Komponenten-Lacke wurden als Filme auf Glastafeln aufgerakelt (Trockenfilmschicht 20 $\mu$m) und bei Raumtemperaturtrocknung nach 24 h, bei Ofentrocknung nach 2 h gemessen.

Die Beständigkeit der Filme gegen Superbenzin wurde an Klarlacken getestet. die nach dem Naß-in-Naß Verfahren auf einen handelsüblichen Silbermetallic-Basislack auf gebracht wurden Der verwendete Basislack enthielt ein Bindemittelgemisch aus Celluloseacetobutyrat, Aminoplastharz und OH-Polyesterharz sowie Metallpigmente. Die Klarlack-Trockenfilmstärke lag bei 50 μm. Die Lösungsmittelbeständigkeit wurde bestimmt, indem ein mit Superbenzin getränkter Wattebausch 5 Minuten abgedeckt auf dem Film belassen wurde. Der Film wurde als i.O. (in Ordnung) bezeichnet, wenn keine Markierung (auch keine Randmarkierung) mehr zu sehen war. Die Benzinfestigkeit wurde an den Tafeln bestimmt. die bei Raumtemperatur getrocknet worden waren.

Die Tofpzeiten wurden im DIN-4-Auslaufbecher bestimmt.

Die Stammlacke 1, 2 und 3 auf der Basis der Acrylatharzlösungen I und II wurden mit der oben beschriebenen Härterlösung A im Verhältnis 2 : 1 gemischt und mit einem Lösungsmittelgemisch auf eine Spritzviskosität von 16 sec. eingestellt.

Das Überzugsmittel auf Basis des Stammlackes 1 und der Härterlösung A wird im folgenden als Beispiel 1 bezeichnet, das Überzugsmittel auf Basis des Stammlackes 2 und der Härterlösung A als Beispiel 2 und das Überzugsmittel auf Basis des Stammlackes 3 als Vergleichsbeispiel 1.

| | | Beispiel 1 | Beispiel 2 | Vergleichs-Beispiel 1 |
|---|---|---|---|---|
| Pendelhärte | RT | 139 sec | 133 sec | 109 sec |
| | 30' 60'' | 109 sec | 109 sec | 85 sec |
| Topfzeit | nach 4 h | 51 sec | 28 sec | 24 sec |
| | nach 6 h | geliert | 30 sec | 29 sec |
| Benzintest | | nach 3 Tagen i.O. | nach 3 Tagen i.O. | nach 8 Tagen nicht i.O. |

## Prüfung der Überzugsmittel auf der Basis der Stammlacke 4, 5, 6 und 7 und der Härterlösung B

Die nachfolgenden Prüfungen wurden als Klarlacke auf Aluminiumtafeln durchgeführt. Die Pendelhärte wurde bei Filmen mit einer Trockenfilmstärke von 20 μm auf Glas bestimmt, der Benzintest (Superkraftstoff) wurde bestimmt bei Klarlackfilmen mit einer Trockenfilmschicht von 50 μm auf Aluminiumtafeln. Die Prüfungen wurden ansonsten wie oben beschrieben durchgeführt.

Die Stammlacke 4, 5, 6 und 7 auf Basis der Acrylatlösungen III, IV, V und VI wurden mit der oben beschriebenen Härterlösung B im Verhältnis 100 : 17 gemischt und mit einem Lösungsmittelgemisch auf eine Spritzviskosität von 16 sec eingestellt (DIN-4-Auslaufbecher).

Das Überzugsmittel auf der Basis des Stammlacks 4 und der Härterlösung B wird im folgenden als Beispiel 3 bezeichnet, die Überzugsmittel auf Basis der Stammlacke 5, 6 und 7 und der Härterlösung B als Vergleichsbeispiele 2, 3 und 4.

| | Beispiel 3 | Vergleichs- beispiel 2 | Vergleichs- beispiel 3 | Vergleichs- beispiel 4 |
|---|---|---|---|---|
| Pendelhärte nach 12 h Trocknung bei RT | 158 sec | 144 sec | 71 sec | 136 sec |
| Benzintest | nach 2 Tagen i.O. | nach 3 Tagen i.O. | nach 5 Tagen i.O. | nach 3 Tagen i.O. |
| Topfzeit nach 8 h | 23 sec | 24 sec | 21 sec | 22 sec |

**Ansprüche**

1. Überzugsmittel, enthaltend als wesentliches Bindemittel ein hydroxylgruppenhaltiges Acrylatcopolymerisat mit Carboxylgruppen und tertiären Aminogruppen, wobei das Acrylatcopolymerisat eine Säurezahl von 5 bis 30 mg KOH/g hat, als Vernetzungsmittel ein Polyisocyanat mit mindestens zwei Isocyanatgruppen pro Molekül, wobei das Verhältnis der Isocyanatgruppen des Polyisocyanats zu den Hydroxylgruppen des Acrylatcopolymerisats im Bereich von 0,3 : 1 bis 3,5 : 1 liegt, organisches Lösungsmittel, gegebenenfalls Pigmente, Füllstoffe und übliche Hilfsstoffe und Additive sowie gegebenenfalls einen Katalysator für die Vernetzung, dadurch gekennzeichnet, daß das Acrylatcopolymerisat (A) erhältlich ist durch Copolymerisation von
a) 5 bis 35 Gewichts-% Hydroxyalkylestern α,β-ungesättigter Carbonsäuren
b) 0,1 bis 8 Gewichts-% bevorzugt 0,5 bis 4 Gewichts-%, ethylenisch ungesättigten Carbonsäuren
c) 0,3 bis 4 Gewichts-%, bevorzugt 0,3 bis 2 Gewichts-%, Monomeren mit tertiären Aminogruppen und
d) 70 bis 90 Gewichts-% weiteren Monomeren mit einer polymerisierbaren, olefinisch ungesättigten Doppelbindung,
wobei die Summe von a, b, c und d 100 Gewichts-% beträgt und die Aminzahl von (A) 1 bis 10 mg KOH/g, bevorzugt 1 bis 5 mg KOH/g, beträgt.
2. Überzugsmittel nach Anspruch 1, dadurch gekennzeichnet, daß die Komponente a zumindest teilweise ein Umsetzungsprodukt aus einem Mol Hydroxyethylacrylat und/oder Hydroxyethylmethacrylat und durchschnittlich 2 Mol ε-Caprolacton ist.
3. Überzugsmittel nach Anspruch 1, dadurch gekennzeichnet, daß die Komponente a zumindest teilweise ein Umsetzungsprodukt aus Acrylsäure und/oder Methacrylsäure mit dem Glycidylester einer Carbonsäure mit einem tertiären α-Kohlenstoffatom ist.
4. Überzugsmittel nach Anspruch 1 bis 3, dadurch gekennzeichnet, daß sie bis zu 15 Gewichts-%, bezogen auf ihr Gewicht, eines oder mehrerer tertiärer Monoalkohole enthält.
5. Verfahren zur Herstellung des Überzugsmittels nach Anspruch 1 bis 4, dadurch gekennzeichnet, daß zur Herstellung des Acrylatcopolymerisats (A)
a) 5 bis 35 Gewichts-% Hydroxyalkylester α,β-ungesättigter Carbonsäuren
b) 0,1 bis 8 Gewichts-%, bevorzugt 0,5 bis 4 Gewichts-%, ethylenisch ungesättigte Carbonsäuren
c) 0,3 bis 4 Gewichts-%, bevorzugt 0,3 bis 2 Gewichts-%,Monomere mit tertiären Aminogruppen und
d) 70 bis 90 Gewichts-% weitere Monomere mit einer polymerisierbaren, olefinisch ungesättigten Doppelbindung
in einem organischen Lösungsmittel unter Zusatz von Polymerisationsinitiatoren copolymerisiert werden, wobei die Summe von a, b, c und d 100 Gewichts-% beträgt, die Säurezahl des Copolymerisats 5 bis 30 mg KOH/g und die Aminzahl des Acrylatcopolymerisats 1 bis 10 mg KOH/g, bevorzugt 1 bis 5 mg KOH/g, beträgt, und dieses Copolymerisat A) mit b) einem Polyisocyanat mit mindestens zwei Isocyanatgruppen pro Molekül, organischem Lösungsmittel, gegebenenfalls Pigmenten, Füllstoffen und üblichen Hilfsstoffen und Additiven sowie gegebenenfalls mit einem Katalysator für die Vernetzung durch Mischen und gegebenenfalls durch Dispergieren zu einer Überzugsmasse verarbeitet wird mit der Maßgabe, daß das Verhältnis der Isocyanatgruppen con B) zu den Hydroxylgruppen von A) im Bereich von 0,3 : 1 bis 3,5 : 1 liegt.

11

6. Verfahren nach Anspruch 5, dadurch gekennzeichnet, daß die Komponente a zumindest teilweise ein Umsetzungsprodukt aus einem Mol Hydroxyethylacrylat und/oder Hydroxyethylmethacrylat und durchschnittlich 2 Mol ε-Caprolacton ist.

7. Verfahren nach Anspruch 5, dadurch gekennzeichnet, daß die Komponente a zumindest teilweise ein Umsetzungsprodukt aus Acrylsäure und/oder Methacrylsäure mit dem Glycidylester einer Carbonsäure mit einem tertiären α-Kohlenstoffatom ist.

8. Verfahren nach Anspruch 5 bis 7, dadurch gekennzeichnet, daß bis zu 15 Gewichts-%, bezogen auf das Gesamtgewicht der Überzugszusammensetzung, eines oder mehrerer tertiärer Monoalkohole verwendet werden.

9. Verfahren nach Anspruch 5 bis 8, dadurch gekennzeichnet, daß als Polymerisationsinitiator Azobisisobutyronitril gegebenenfalls zusammen mit einem Reduktionsmittel verwendet wird.

10. Verfahren nach Anspruch 5 bis 9, dadurch gekennzeichnet, daß als Polymerisationsinitiator ein thermolabiles, hochsubstituiertes Ethanderivat, gegebenenfalls zusammen mit einem Reduktionsmittel, verwendet wird.

11. Verfahren nach Anspruch 9 oder 10, dadurch gekennzeichnet, daß das Reduktionsmittel unterphosphorige Säure ist.

12. Verfahren zur Herstellung eines Überzugs, bei dem das Überzugsmittel nach Anspruch 1, 2, 3 oder 4 durch Spritzen, Fluten, Tauchen, Walzen, Rakeln oder Streichen auf ein Substrat in Form eines Films aufgebracht wird und der Film bei Temperaturen bis etwa 100 °C zu einem festhaftenden Überzug gehärtet wird.

13. Verwendung der Überzugsmittel, hergestellt nach den Verfahren nach Anspruch 5 bis 11, für die Autoreparaturlackierung.

14. Verwendung der Überzugsmittel, hergestellt nach den Verfahren nach Anspruch 5 bis 11, als Klarlack, als pigmentierter Decklack oder als Füller.

15. Verwendung der Überzugsmittel, hergestellt nach den Verfahren nach Anspruch 5 bis 11, als Klarlack auf einem Basislack für metallpigmentierte Zweischichtlackierungen nach dem Naß-in-Naß-Verfahren.

Europäisches
Patentamt

**EUROPÄISCHER RECHERCHENBERICHT**

Nummer der Anmeldung

EP 87 10 1569

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CHEMICAL ABSTRACTS, Band 91, Nr. 18, 29. Oktober 1979, Seite 70, Zusammenfassung Nr. 142199z, Columbus, Ohio, US; & JP-A-79 61 234 (HITACHI CHEMICAL CO.) 17-05-1979 | 1,5 | C 08 G 18/62<br>C 08 F 220/34<br>C 08 F 226/06<br>C 09 D 3/72<br>C 09 D 3/80 |
| | --- | | |
| X | DE-A-1 956 960 (E.I. DU PONT DE NEMOURS & COMP.)<br>* Ansprüche 1,2,8,9,19-26 * | 1,5 | |
| | --- | | |
| A | EP-A-0 001 304 (AKZO N.V.)<br>* Ansprüche 1,4 * | 8 | |
| | --- | | |
| A | FR-A-2 316 263 (KYOWA GAS CHEMICAL INDUSTRY CO. LTD)<br>* Ansprüche 1-3,8-12,18-21; Seite 6, Zeilen 12-23; Seite 7, Zeilen 4-12 * | 1 | RECHERCHIERTE SACHGEBIETE (Int. Cl.4)<br><br>C 08 G<br>C 08 F |
| | --- | | |
| A | EP-A-0 099 011 (BASF AG)<br>* Ansprüche 1,6,8,9 * | 1 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 15-07-1987 | VAN PUYMBROECK M.A. |